Europäisches Patentamt

**European Patent Office**

**Office européen des brevets**

(11) Publication number: **0 150 884**
A2

# EUROPEAN PATENT APPLICATION

(21) Application number: **85200081.9**

(22) Date of filing: **25.01.85**

(51) Int. Cl.⁴: **F 03 D 9/00,** H 02 P 9/42, H 02 K 7/18

(30) Priority: **02.02.84 IT 1940484**

(43) Date of publication of application: **07.08.85** Bulletin 85/32

(84) Designated Contracting States: **AT BE CH DE FR GB LI LU NL SE**

(71) Applicant: **TEMA S.p.A., Viale Aldo Moro 38, Bologna (IT)**

(72) Inventor: **Carli, Roberto, Via Feltre 71, I-20134 Milan (IT)**

(74) Representative: **Roggero, Sergio et al, Ing. Barzanò & Zanardo Milano S.p.A. Via Borgonuovo 10, I-20121 Milano (IT)**

(54) **Wind turbine apparatus for electrical energy production.**

(57) A wind turbine apparatus for the production of electrical energy at a predetermined fixed frequency, comprising a wind turbine and a synchronous or asynchronous electric current generator, characterised in that the generator comprises a rotor, and an armature (stator) which is able to rotate in a controlled manner about the axis of the generator both in a clockwise and anti-clockwise direction in such a manner that the speed of the rotating magnetic field inside the generator corresponds to the predetermined fixed frequency.

This invention relates to a wind turbine apparatus for electrical energy production.

More particularly, the invention relates to a variable-speed wind turbine for producing fixed-frequency electrical energy.

The known art offers various types of variable-speed wind turbine apparatus for producing fixed-frequency electrical energy.

The known apparatus can be divided into the following types:

1) those having their wind turbine connected to direct current generators or to alternators unsynchronised with the mains frequency, and these require subsequent conversion of the direct current or of the variable frequency current into fixed-frequency alternating current;

2) those in which the wind turbine is connected to the constant-frequency current generator by means of mechanical transmissions of variable speed ratio;

3) those in which the wind turbine is connected to a number of generators of different rotational speeds, each of these generators being of fixed speed.

It is known that the aerodynamic efficiency of a wind turbine can be kept at its optimum value over a wide wind speed range only if the rotational speed of said turbine can vary proportionally with the wind speed. The apparatus of the first type have drawbacks due to the complexity and cost of the frequency conversion equipment, which can create mains connection problems, especially in the case of high power.

The apparatus of the second type have a very complex and costly

0150884

- 2 -

transmission, and a mechanical efficiency which is not high.

The apparatus of the third type have the advantage of simplicity, but the drawback of having to operate only at two or three fixed ratios.

It has been surprisingly found possible to increase the efficiency of a wind turbine apparatus for the production of electrical energy at a predetermined fixed frequency, by connecting said wind turbine to a (synchronous or asynchronous) generator, the armature (stator) of which is able to rotate in a controlled manner about the generator axis in both directions (clockwise and anti-clockwise) in such a manner that the speed of the rotating magnetic field inside the generator corresponds to the predetermined fixed frequency.

The apparatus according to the present invention comprises:

1)   a wind turbine constituted by a wind rotor connected to a step-up gear;

2)   an alternating current generator constituted by an armature (stator) able to rotate clockwise and anti-clockwise according to conditions, and a rotor connected in a fixed manner to the step-up gear;

3)   a direct current electrical machine, the rotor of which is connected mechanically in any manner to the armature of point 2).

The direct current electrical machine operates either as a motor or as a generator according to circumstances, and is connected to the mains by means of a rectifier-inverter unit.

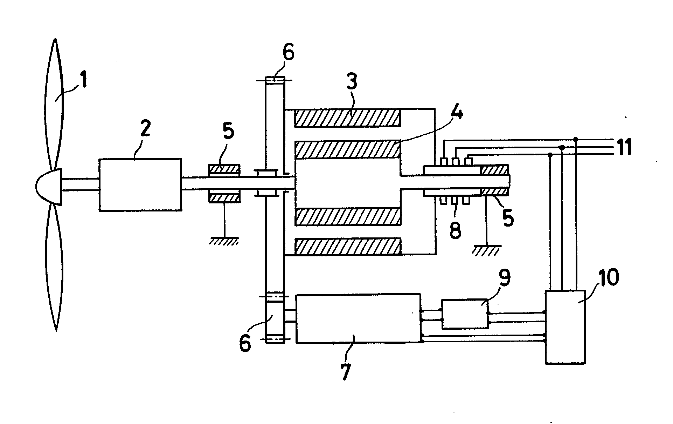

A non-limiting description is given hereinafter of the apparatus according to the present invention with reference to the accompanying figure. In this figure, the reference numeral 1 represents the wind rotor, 2 the step-up gear, 3 the stator of the synchronous (or asynchronous) generator, and 4 the rotor of the synchronous (or asynchronous) generator.

The reference numeral 5 indicates the support bearings, 6 the mechanical transmission between the direct current machine and the armature, and in particular of gear, chain or belt construction, 7 indicates the direct current machine and 8 the electrical energy slip-ring system for connection to the mains, 9 indicates a tachometer dynamo which measures the rotational speed of the machine 7, and 10 indicates a rectifier-inverter unit, also connected to the mains.

The apparatus according to the present invention operates in the following manner.

For a given wind speed, the rotor 1 of the wind turbine rotates at a certain speed. The rotary motion is transmitted by way of the step-up gear 2 to the rotor 4.

The armature is connected to the mains by means of the slip-ring system 8.

By virtue of this connection, as the rotor 4 moves, a torque arises counteracting the rotor movement and tending to cause the armature 3 to rotate in the same direction as the rotor.

The counteracting torque is opposed by the direct current machine 7 by way of the transmission 6.

The torque of the direct current machine, which can operate as a motor or generator, is controlled by the unit 10 which receives from the tachometer dynamo 9 a signal proportional to the rotational speed of the machine 7.

_4 _

The operational logic of the unit 10 is such that the torque generated by the machine 7 is at each moment proportional to the square of the rotational speed of the armature 3, which can be in the same or opposite direction to that of the rotor 4.

It will be assumed that the wind speed is such that the optimum rotational speed of the rotor 4 is approximately equal to the rotational speed of the rotating magnetic field when the armature 3 is at rest.

Under these conditions, the machine 7 is required to supply a torque such as to keep the armature 3 at rest and allow conversion of the mechanical energy transmitted to the rotor into electrical energy in the armature and consequently in the mains.

This condition corresponds to the operation of a conventional fixed-stator apparatus.

Under such conditions the machine 7 absorbs practically no energy, being required to supply only the opposing torque, and no mechanical energy.

As the wind speed increases, the rotor 4 has to rotate at an increased speed in order to maintain optimum operation thereof, and this means that it has to be able to increase its speed.

However, this would be incompatible with a situation in which the speed of the rotating magnetic field corresponds to mains frequency. At this point, in order to re-establish a relative speed between the rotor 4 and armature 3 equal to about that speed of the rotating magnetic field which corresponds to mains frequency, the armature 3 is allowed to rotate in the same direction as the rotor 4, thus driving the machine 7.

To attain this, the parameters of the regulator 10 are set such that the counteracting torque applied to the armature 3 varies with wind speed in the same manner as the wind rotor torque (under optimum wind rotor conditions).

Equilibrium conditions are restored to the system when the torque generated by the machine 7 (which is a function of the rotational speed of the tachometer dynamo 9 transmitted to the armature 3) is such as to counterbalance the torque applied to the rotor 4.

Under these conditions the machine 7 operates as a direct current generator, and the energy produced is fed to the mains 11 by way of the unit 10, which now functions as an inverter.

Finally, should the wind speed fall below that at which the armature is at rest, the wind rotor must be able to slow down in order to operate under optimum conditions. This would require a reduction in the relative speed between the rotor 4 and armature 3, this being incompatible with a situation in which the speed of the magnetic field corresponds to mains frequency.

At this point, in order to restore magnetic field conditions compatible with mains frequency, the machine 7 must cause the armature 3 to rotate in the opposite direction to the motion of the rotor 4.

To attain this, the unit 10 has to control the machine 7 in such a manner that it produces a torque proportional to the square of its speed.

Under these conditions the machine operates as a motor, by withdrawing electrical power from the mains.

It should be noted that said withdrawn power is added to that originating in the wind rotor, and together with this latter is retrans-

0150884

- 6 -

mitted to the mains, but with some loss.

An applicational example of the apparatus according to the present invention is described hereinafter, it being understood that the data provided are not to be considered as limitative of the invention.

EXAMPLE

An apparatus was constructed constituted by a rotor of vertical axis with a diameter of 14 m and two straight blades of height 10 m, able to provide at its shaft a power of 47 kW at 52.5 r.p.m., with a wind of 11 m/sec.

The step-up ratio used was 40.2/1.

A 4-pole asynchronous generator was used, with a synchronous speed of 1500 r.p.m.

The direct current machine was a permanent magnet motor of rated power 13 kW, with a maximum speed of 2100 r.p.m.

The reduction ratio between the direct current machine and generator armature was 1/3.75, and was obtained by means of a toothed belt. The operating data of the apparatus under different wind conditions are shown in the following table, the mechanical and electrical losses being ignored in order to allow a simpler understanding of the operation.

These nominal losses can be evaluated at about 10% under the aforesaid rated conditions.

| Wind motor | | | Rotor | | Stator | | Air gap | | D.C. machine | | |
|---|---|---|---|---|---|---|---|---|---|---|---|
| V | Prot | N.rot. | $n_1$ | $C_1$ | $n_2$ | $C_2$ | n | P | $n_3$ | $C_3$ | $P_3$ |
| m/s | kW | r.p.m. | r.p.m. | N.m. | r.p.m. | N.m. | r.p.m. | kW | r.p.m. | N.m. | kW |
| 5 | 4.4 | 23.9 | 960 | 44 | -554 | 44 | 1514 | 7.0 | -2077 | 11.7 | -2.6 |
| 8 | 18 | 38.2 | 1535 | 112 | 0 | 112 | 1535 | 18.0 | 0 | 30 | 0 |
| 11 | 47 | 52.5 | 2110 | 213 | 544 | 213 | 1566 | 34.9 | 2040 | 56.8 | 12.1 |

V = wind speed

Prot. = mechanical power of wind rotor

N.rot. = rotational speed of wind rotor

$n_1$ = rotational speed of asynchronous generator

$C_1$ = asynchronous generator rotor torque

$n_2$ = rotational speed of asynchronous generator armature (stator) (the sign - indicates rotation in the opposite direction to that of the rotor)

$C_2$ = counteracting torque of asynchronous generator armature (stator)

n = relative speed between rotor and asynchronous generator armature

P       = power generated by asynchronous generator

$n_3$     = rotational speed of direct current machine

$C_3$     = torque provided by direct current machine

$P_3$     = power absorbed (-) or generated by direct current machine

CLAIMS

- 1 -

1. A wind turbine apparatus for the production of electrical energy at a predetermined fixed frequency, comprising a wind turbine and a synchronous or asynchronous electric current generator, characterised in that the generator comprises a rotor, and an armature (stator) which is able to rotate in a controlled manner about the axis of the generator both in a clockwise and anti-clockwise direction in such a manner that the speed of the rotating magnetic field inside the generator corresponds to the predetermined fixed frequency.

2. An apparatus as claimed in claim 1, characterised in that the generator rotor is connected in a fixed manner to a step-up gear which is itself connected to the wind rotor.

3. An apparatus as claimed in claim 1, characterised in that the generator armature (stator) is connected mechanically to the rotor of a direct current electrical machine.

4. An apparatus as claimed in claim 3, wherein the direct current electrical machine operates either as a motor or as a generator according to circumstances.

5. An apparatus as claimed in claim 3, wherein the direct current electrical machine is connected to the mains by way of a rectifier-inverter unit.

6. An apparatus as claimed in the preceding claims and as described and illustrated.